# EUROPÄISCHE PATENTANMELDUNG

(11) **EP 2 190 030 A2**
(43) Veröffentlichungstag der Anmeldung: **26.05.2010**
(21) Anmeldenummer: 09013852.0
(22) Anmeldetag: 04.11.2009
(51) Int. Cl.: H01L 31/042

(54) **Photovoltaikeinheit, Photovoltaiksystem sowie Verfahren zur Herstellung einer Photovoltaikeinheit**

(30) Priorität: 22.11.2008 DE 102008058640
(71) Anmelder: ROTO FRANK AG, 70771 Leinfelden-Echterdingen (DE)
(72) Erfinder: Brunner, Elmar, 97922 Lauda-Königshofen (DE)
(74) Vertreter: Grosse, Rainer

(57) **Zusammenfassung**

Photovoltaikeinheit mit mindestens einem von einem Stützblech getragenen Photovoltaikmodul und mit mindestens einer der Befestigung des Photovoltaikmoduls an dem Stützblech dienenden Halterung. Es ist vorgesehen, dass das Stützblech die Halterung bildet.

Ferner betrifft die Erfindung ein Photovoltaiksystem mit mehreren Photovoltaikeinheiten sowie ein Verfahren zur Herstellung einer Photovoltaikeinheit.

## Beschreibung

Die Erfindung betrifft eine Photovoltaikeinheit mit mindestens einem von einem Stützblech getragenen Photovoltaikmodul und mit mindestens einer der Befestigung des Photovoltaikmoduls an dem Stützblech dienenden Halterung.

Ferner betrifft die Erfindung ein Photovoltaiksystem sowie ein Verfahren zum Herstellen einer Photovoltaikeinheit, die mindestens ein von einem Stützblech getragenes Photovoltaikmodul aufweist, wobei das Photovoltaikmodul mittels mindestens einer Halterung an dem Stützblech befestigt wird.

Photovoltaikeinheiten, Photovoltaiksysteme sowie Verfahren zu deren Herstellung sind aus dem Stand der Technik bekannt. Derartige Photovoltaikeinheiten weisen ein Photovoltaikmodul (auch Photovoltaik-Laminat genannt) auf, das in der Regel mehrere Solarzellen umfasst, welche die im Licht enthaltene Strahlungsenergie direkt in elektrische Energie wandeln. Zur besseren Handhabung werden die Solarzellen in Form des Photovoltaikmoduls verwendet. Weiterhin besteht ein derartiges Photovoltaikmodul aus einer auf der zur Sonne gewandten Seite angeordneten Glasscheibe, hinter der die Solarzellen in einer transparenten Kunststoffschicht angeordnet und miteinander verschaltet sind, sowie aus einer Rückseitenkaschierung, die unter anderem als Witterungsschutz dient. Häufig weisen derartige Photovoltaikmodule auch noch einen Rahmen zum Schutz bei Transport, Handhabung und Montage auf. Häufig werden nicht einzelne Photovoltaikmodule, sondern Photovoltaikeinheiten hergestellt und angeboten, die eine oder mehrere Photovoltaikmodule aufweisen. Diese Photovoltaikeinheiten weisen darüber hinaus ein Stützblech auf, von dem das jeweilige Photovoltaikmodul getragen und an das das jeweilige Photovoltaikmodul befestigt wird. Das Photovoltaikmodul wird dabei mittels einer Halterung an dem Stützblech befestigt. Als Halterung weist üblicherweise der Rahmen des Photovoltaikmoduls Befestigungslaschen auf, wie aus der DE 602 20 760 T2 bekannt, die an dem Stützblech festgeschraubt oder genietet werden können. Diese Photovoltaikeinheiten können dann beispielsweise auf dem Dach eines Hauses installiert werden. Zwar müssen an der Stelle, an der die Photovoltaikeinheiten befestigt werden sollen, zuvor die Dachziegel entfernt werden, durch das Vorsehen des Stützblechs unter dem Photovoltaikmodul wird jedoch die wasserabhaltende Funktion des Daches nach wie vor gewährleistet. Die Montage der bekannten Photovoltaikeinheiten, insbesondere das Festmachen der Befestigungslaschen an dem Stützblech und das dazugehörige Ausrichten des Photovoltaikmoduls auf dem Stützblech sind jedoch zeitintensiv. Darüberhinaus haben derartige Photovoltaikeinheiten auf Grund der zur Befestigung/Montage benötigten Teile ein relativ hohes Gewicht.

Der Erfindung liegt daher die Aufgabe zugrunde, eine Photovoltaikeinheit zu schaffen, die günstig und leicht herzustellen ist und eine einfache und schnelle Montage ermöglicht.

Diese Aufgabe wird erfindungsgemäß dadurch gelöst, dass das Stützblech die Halterung bildet, beziehungsweise, dass die Halterung von dem Stützblech gebildet wird. Die Funktion des Stützbleches geht somit über die bisherige Funktion als Trageelement für das Photovoltaikmodul hinaus und bietet nunmehr gleichzeitig eine Befestigungsmöglichkeit für das Photovoltaikmodul, sodass dieses fest an dem Stützblech gehalten und ausgerichtet ist. Hierbei sind keine zusätzlichen Befestigungselemente an dem Photovoltaikmodul vonnöten, sodass die erfindungsgemäße Photovoltaikeinheit schneller und günstiger als bekannte Photovoltaikeinheiten hergestellt werden kann. Je nach Anzahl der auf dem Stützblech anzuordnenden Photovoltaikmodule wird zweckmäßigerweise eine entsprechende Anzahl von Halterungen durch das Stützblech gebildet. Alternativ ist die Halterung durch das Stützblech vorteilhafterweise derart ausgebildet, dass mehrere Photovoltaikmodule davon/daran gehalten werden können.

Vorteilhafterweise wird die Halterung von einer zumindest bereichsweisen Einfassung des Photovoltaikmoduls durch das Stützblech gebildet. Das Stützblech ist also derart geformt, dass es das Photovoltaikmodul zumindest bereichsweise einfasst, mit anderen Worten also einen Rahmen für das Photovoltaikmodul zumindest bereichsweise bildet. Das Photovoltaikmodul wird also bereichsweise mit einer Blechkante des Stützblechs umschlossen. Bevorzugt wird die Halterung des Stützblechs durch eine einstückig mit dem Stützblech ausgebildete Photovoltaikmodul-Aufnahme gebildet, in die das Photovoltaikmodul eingesteckt, eingeklemmt und/oder eingeschoben werden kann.

Vorteilhafterweise fasst das Stützblech das Photovoltaikmodul an zumindest einer Seitenkante wenigstens bereichsweise ein. Mit anderen Worten wird die Seitenkante des Photovoltaikmoduls im an dem Stützblech montierten Zustand wenigstens bereichsweise an einer seiner Seitenkanten von dem Stützblech umfasst. Durch das bereichsweise Einfassen der Seitenkante des Photovoltaikmoduls wird eine formschlüssige Halterung des Photovoltaikmoduls an dem Stützblech gewährleistet, die einfach zu montieren und herzustellen ist. In einer Weiterbildung der Erfindung ist die Halterung derart eigenelastisch ausgebildet, dass die Seitenkante des Photovoltaikmoduls in die Halterung einklemmbar ist. Weiterhin bildet das Stützblech einen Kantenschutz für die Seitenkante des Photovoltaikmoduls.

Bevorzugt fasst das Stützblech das Photovoltaikmodul an zwei gegenüberliegenden Seitenkanten wenigstens bereichsweise ein. Durch das Einfassen an den gegenüberliegenden Seitenkanten des Photovoltaikmoduls wird das Photovoltaikmodul auf einfache Art und Weise ausgerichtet und an dem Stützblech gehalten. Vorteilhafterweise erstreckt sich die Einfassung beziehungsweise die Halterung jeweils entlang der gesamten Länge (der Seitenkante) des Photovoltaikmoduls. Dadurch bietet die Halterung gleichzeitig eine Rahmenfunktion für das Photovoltaikmodul, sodass seine Seitenkanten, zumindest die zwei gegenüberliegenden eingefassten Seitenkanten, geschützt sind (Kantenschutz). Die Halterung führt dabei zusätzlich zu einer weiteren VersteifungNerstärkung des Photovoltaikmoduls. Durch das Einfassen an zwei gegenüberliegenden Seitenkanten kann das Photovoltaikmodul beispielsweise in die Einfassungen des Stützbleches eingeschoben werden. Vorteilhafterweise ist das Stützblech derart ausgebildet, dass die sich gegenüberliegenden Einfassungen bei der Montage des Photovoltaikmoduls vorgespannt sind, sodass das Photovoltaikmodul zwischen den gegenüberliegenden Halterungen an den entsprechenden Seitenkanten eingespannt wird. Darüber hinaus erlaubt die vorteilhafte Ausbildung des Stützblechs auch eine einfache Demontage des Photovoltaikmoduls, auch wenn das Stützblech beispielsweise bereits an einem Gebäudedach befestigt ist.

Nach einer Weiterbildung der Erfindung ist das Photovoltaikmodul rahmenlos ausgebildet. Das bedeutet, dass das Photovoltaikmodul selbst keinen eigenen Rahmen - wie sonst üblich - aufweist. Der Rahmen wird nunmehr, wie oben beschrieben, bevorzugt von dem Stützblech gebildet. Wobei es natürlich auch denkbar ist die Halterung beziehungsweise die Einfassung oder den Kantenschutz durch das Stützblech an jeder Kante des Photovoltaikmoduls vorzusehen. Durch die rahmenlose Ausbildung des Photovoltaikmoduls kann dieses sowohl günstiger also auch leichter und flacher bezüglich seines Aufbaus hergestellt werden.

Zweckmäßigerweise weist die Einfassung zwischen dem Stützblech und dem Photovoltaikmodul ein Dichtelement, insbesondere ein Dichtgummi auf. Zwischen dem Photovoltaikmodul und dem Stützblech ist somit ein Dichtelement vorgesehen, wodurch verhindert wird, dass Regenwasser an dem Photovoltaikmodul vorbei in einen Freiraum zwischen dem Stützblech und dem Photovoltaikmodul gerät, wo es beispielsweise zu Korrosionsschäden führen kann. Werden an dem Stützblech mehrere Photovoltaikmodule mittels der erfindungsgemäßen Halterung gehalten, so sind zweckmäßigerweise zwischen den jeweiligen Photovoltaikmodulen ebenfalls Dichtmittel vorgesehen, sodass Regenwasser nicht zwischen den Photovoltaikmodulen hindurchtreten kann.

Nach einer Weiterbildung der Erfindung ist das Stützblech als Trapezblech ausgebildet. Zweckmäßigerweise weist das Trapezblech mehrere Erhebungen beziehungsweise Stege auf, auf denen das Photovoltaikmodul aufliegt. Ein Trapezblech zeichnet sich durch den besonderen Querschnittsverlauf des Blechs aus. Im Querschnitt weist ein Trapezblech ein gekantetes Profil auf, im Gegensatz zu einem Wellblech, das im Querschnitt gekrümmte Linien aufweist. Durch das gekantete Profil entstehen an den Erhebungen des Trapezblechs Auflageflächen, auf denen das Photovoltaikmodul flächig aufliegt. Wird die Photovoltaikeinheit über einen längeren Zeitraum der Sonneneinstrahlung ausgesetzt, so erhitzt es sich und gibt Wärme an das Trapezblech ab. Aufgrund der Auflageflächen der Erhebungen kann hierbei Wärme besonders gut abgeführt werden. Darüber hinaus wird die Oberfläche auf der Rückseite des Photovoltaikmoduls durch das Trapezblech vergrößert, so dass letzteres wie Kühlrippen für das Photovoltaikmodul wirkt. Durch die Freiräume des Trapezblechs kann Luft strömen, an die die Wärme des Photovoltaikmoduls weitergegeben werden kann. Hierdurch wird insgesamt eine vorteilhafte Reduzierung der Temperatur des Photovoltaikmoduls erreicht, die dazu führt, dass die Leistung des Photovoltaikmoduls erhöht werden kann.

Zweckmäßigerweise verlaufen die Erhebungen des Trapezblechs parallel zu den gegenüberliegenden Seitenkanten des Photovoltaikmoduls oder - mit anderen Worten - parallel zu den gegenüberliegenden Einfassungen bezogen auf eine zweiseitige Einfassung des Photovoltaikmoduls durch das Stützblech. Durch den parallelen Verlauf gestaltet sich das Formen der Halterung beziehungsweise der Einfassungen/der Kantenschutze besonders einfach. Zweckmäßigerweise wird die Halterung von dem Stützblech an dessen äußerem Randbereich gebildet, wobei hier die Biege- beziehungsweise Knickkante des Stützblechs parallel zu den Kanten der Erhebungen verlaufen. Damit verlaufen sämtliche Knick-/Biegekanten des Trapezblechs parallel zueinander, wodurch die Herstellung einfach und günstig ausfällt.

Nach einer vorteilhaften Weiterbildung der Erfindung ist mindestens eine der mittleren Erhebungen des Trapezbleches höher als die übrigen Erhebungen ausgebildet. Besonders bevorzugt ist die mittlere Erhebung erhöht ausgebildet. Damit wird das Photovoltaikmodul zwischen der Erhöhung und den seitlichen Einfassungen beziehungsweise Halterungen vorgespannt, sodass es vorteilhafterweise eine leichte Biegung erfährt. Dadurch entsteht ein Anpressdruck beziehungsweise eine Verspannung zwischen dem Photovoltaikmodul und dem Trapezblech, wodurch zu dem Formschluss der Halterung ein Kraftschluss hinzukommt, der die Gefahr eines ungewollten Lösens des Photovoltaikmoduls von dem Stützblech verringert. Darüber hinaus wird die Wärmeabfuhr durch das Andrücken des Photovoltaikmoduls an das Trapezblech beziehungsweise an die Erhebungen des Trapezblechs erhöht. In einer weiteren Ausführungsform der Erfindung bilden die Erhebungen des Trapezblechs im Querschnitt gesehen eine bogenförmige, unterbrochene Stützfläche für das Photovoltaikmodul, sodass letzteres in/an dem Stützblech verspannt ist und mit jeder der Erhebungen einen Flächenkontakt bildet.

Vorteilhafterweise erstrecken sich die freien Enden des Stützbleches über das Photovoltaikmodul hinaus. Bei dem Stützblech, das an zwei gegenüberliegenden Seiten des Photovoltaikmoduls jeweils eine Einfassung beziehungsweise einen Kantenschutz bildet, erstrecken sich die freien Enden über die Länge des Photovoltaikmoduls hinaus. Wobei hier die Längsrichtung in Richtung des Verlaufs der Erhebungen zu sehen ist. Insgesamt ist das Photovoltaikmodul also kürzer als das Stützblech beziehungsweise das Trapezblech (in einer Draufsicht betrachtet) ausgebildet. Bevorzugt erstreckt sich zumindest eines der freien Enden des Stützblechs über das Photovoltaikmodul hinaus. Dies hat den Vorteil, dass wenn mehrere Photovoltaikeinheiten auf einem Dach montiert werden sollen, eine geschuppte Anordnung der Photovoltaikeinheiten möglich ist, die eine geschlossene wasserabhaltende Fläche mittels der bereichsweise aufeinanderliegenden Stützbleche/Trapezbleche bildet.

Nach einer Weiterbildung der Erfindung ist die Photovoltaikeinheit als Warmluftkollektor, beispielsweise für eine Wohnraumheizung, ausgebildet. Somit erfüllt die Photovoltaikeinheit zwei Funktionen, die Wandlung von Licht in elektrische Energie und beispielsweise die Erwärmung von Wasser. Hierzu sind an der Rückseite der Photovoltaikeinheit entsprechende Wärmewandler vorgesehen, wie zum Beispiel eine Luft-Wasser-Wärmepumpe, die von der durch die Freiräume des Trapezblechs strömenden Luft beaufschlagt werden. Vorteilhafterweise weist hierzu das Trapezblech eine verschlossene Rückseite auf.

Das erfindungsgemäße Photovoltaiksystem zeichnet sich durch mindestens zwei nebeneinander und/oder hintereinander angeordnete Photovoltaikeinheiten wie sie oben beschrieben wurden aus. Hintereinander bedeutet in diesem Zusammenhang das Anordnen von Photovoltaikeinheiten in Längsrichtung gesehen hintereinander beziehungsweise in Richtung der Längserstreckung der Erhebungen des Trapezblechs hintereinander. Nebeneinander hingegen bedeutet die Anordnung von Photovoltaikeinheiten parallel zu den Erhebungen des Trapezblechs. Die Einfassungen bilden somit gleichzeitig einen Stoßschutz zwischen den nebeneinander liegenden Photovoltaikeinheiten (Kantenschutz).

Die hintereinander liegenden Photovoltaikeinheiten des Photovoltaiksystems sind insbesondere wie oben beschrieben zweckmäßigerweise geschuppt angeordnet. Die Trapezbleche hintereinander liegender Photovoltaikeinheiten sind also bereichsweise übereinander liegend angeordnet, sodass Regenwasser nicht durch das Photovoltaiksystem hindurch in ein darunter liegendes Dach gelangen kann. Durch das Trapezblech kann warme Luft durch die Hohlräume entlang des gesamten Photovoltaiksystems beispielsweise nach oben in Richtung eines Dachfirsts strömen. Dies ist insbesondere dann von Vorteil, wenn die Photovoltaikeinheiten als Warmluftkollektoren ausgebildet sind. Natürlich ist es auch denkbar, dass nur eine der Photovoltaikeinheiten, insbesondere die oberste Photovoltaikeinheit als Warmluftkollektor ausgebildet ist.

Weiterhin ist vorgesehen, dass zwei nebeneinander liegende Trapezbleche mittels eines Verbindungsstücks miteinander verbunden sind. Das Verbindungsstück dient dabei im Wesentlichen dazu, dass kein Regenwasser zwischen den nebeneinander liegenden Trapezblechen hindurch laufen kann. Das Verbindungsstück dient damit des Weiteren dazu, die nebeneinander liegenden Trapezbleche der Photovoltaikeinheiten aneinanderzuhalten, sodass das Photovoltaiksystem insgesamt stabil und zusammenhängend ausgebildet ist.

Vorteilhafterweise ist das Verbindungsstück als U-Schiene ausgebildet. Insbesondere können hierdurch die die Halterung bildenden Trapezblechenden von dem Verbindungsstück aufgenommen werden. Dazu werden die Trapezblechenden nebeneinander angeordneter Photovoltaikeinheiten in die Vertiefung zwischen den Schenkeln der U-Schiene eingelegt. Dadurch liegen die Trapezbleche mit ihren die Halterung bildenden Enden in der U-Schiene ein, wodurch jeweils eine Dichtung entsteht, sodass sich zwar Regenwasser zwischen den nebeneinander liegenden Photovoltaikeinheiten sammeln, aber nicht durch das Dach gelangen kann. Vielmehr wird das Wasser dann entlang der U-Schiene nach unten zur Traufe, beispielsweise bis zu einer Regenrinne, geleitet.

Bevorzugt weist die U-Schiene zwei parallel verlaufende, die (U-) Schenkel bildende Erhebungen auf, die trapezförmig ausgebildet sind. Vorteilhafterweise entspricht die Trapezform der U-Schiene im Wesentlichen der der Trapezbleche, insbeondere der der Seitenkanten der Trapezbleche, sodass das Ineinanderlegen ohne Weiteres möglich ist. Darüber hinaus wird dadurch ein Flächenkontakt zwischen den Trapezblechen und der U-Schiene ermöglicht, der die Dichtwirkung erhöht.

Besonders bevorzugt liegen die Trapezbleche der nebeneinander liegend angeordneten Photovoltaikeinheiten jeweils mit einer Seitenkante zwischen den Erhebungen der U-Schiene ein.

In einer bevorzugten Weiterbildung der Erfindung sind die Erhebungen der U-Schiene zur Mitte der U-Schiene hin abfallend ausgebildet. Dadurch entsteht ein Freiraum zwischen den Erhebungen der U-Schiene und dem jeweiligen Trapezblech, wodurch die sonst bestehende Kapillarwirkung zwischen der U-Schiene und dem jeweiligen Trapezblech unterbrochen wird, sodass das Regenwasser nicht weiter durch schmale Zwischenräume steigen kann. Zweckmäßigerweise ist das Verbindungsstück an einer Tragekonstruktion und/oder einem Gebäudeelement, wie zum Beispiel an einem Dachbalken, befestigbar. Bei der Montage des Photovoltaiksystems können beispielsweise zunächst mehrere U-Schienen an dem Dach befestigt werden. Anschließend können jeweils zwei Photovoltaikeinheiten nebeneinander liegend in eine U-Schiene, wie oben beschrieben, eingelegt werden. Durch Befestigung der U-Schienen an der Tragekonstruktion, kann das gesamte Photovoltaiksystem vormontiert werden, bevor es als eine Einheit auf einem Dach installiert wird.

Zusätzlich oder alternativ ist vorgesehen, dass die Photovoltaikmodule hintereinander liegender Photovoltaikeinheiten beabstandet zueinander angeordnet sind. Das bedeutet, dass bei der oben genannten geschuppten Anordnung hintereinander liegender Photovoltaikeinheiten diese nicht so weit zusammengeschoben werden, dass zwei Photovoltaikmodule aufeinandertreffen. Dies ist insbesondere dann gefährlich, wenn die Photovoltaikmodule, wie oben beschrieben, bevorzugt nur an den Seitenkanten von dem Stützblech eingefasst sind und die aufeinander weisenden Enden hintereinander liegender rahmenloser Photovoltaikmodule nicht geschützt sind.

Nach einer vorteilhaften Weiterbildung ist zwischen hintereinander liegenden Photovoltaikeinheiten jeweils eine Verbindungsschiene angeordnet, die auf jeweils einem Photovoltaikmodul zumindest bereichsweise aufliegt. Die Verbindungsschiene liegt also auf den hintereinander liegenden Photovoltaikmodulen der Photovoltaikeinheiten auf und ist im Wesentlichen auf der Außenseite angeordnet. Bevorzugt ist die Verbindungsschiene als Abdeckblech ausgebildet, das den Übergang von der einen Photovoltaikeinheit zu der dahinter liegenden Photovoltaikeinheit abdeckt, und somit ebenfalls als Dichtelement beziehungsweise Regenschutz wirkt. Regenwasser, das in Richtung der hintereinander liegenden Photovoltaikeinheiten strömt, dringt somit nicht in den Zwischenraum zwischen zwei hintereinander liegenden Photovoltaikeinheiten ein, sondern wird durch das Abdeckblech auf das Photovoltaikmodul der darauffolgenden Photovoltaikeinheit geleitet. Bevorzugt weist die Verbindungsschiene mindestens ein Dichtelement auf, das sich zweckmäßigerweise über die gesamte Länge der Verbindungsschiene erstreckt und die Dichtwirkung der Verbindungsschiene erhöht.

Zweckmäßigerweise erstreckt sich die Verbindungsschiene über die gesamte Breite zumindest einer Photovoltaikeinheit beziehungsweise eines Photovoltaikmoduls. Hierdurch ist insbesondere das gesamte Photovoltaiksystem wasserundurchlässig ausgebildet. Weist eine Photovoltaikeinheit mehrere darauf angeordnete Photovoltaikmodule auf, so sind zwischen den einzelnen Photovoltaikmodulen zweckmäßigerweise ebenfalls entsprechende Verbindungsschienen beziehungsweise Abdeckbleche angeordnet.

Nach einer Weiterbildung der Erfindung ist die Verbindungsschiene als Dichtleiste ausgebildet, die einen im Wesentlichen T-förmigen Querschnitt aufweist. Durch die Form des Querschnitts werden Anschläge gebildet, durch die die Photovoltaikmodule beziehungsweise die Photovoltaikeinheiten auf einen bestimmten Abstand zueinander gehalten werden. Bei der Montage kann die Verbindungsschiene an einem Trapezblech beziehungsweise an zwei sich überlappenden Trapezblechen und/oder an der Tragekonstruktion oder an einem Gebäudeelement, wie zum Beispiel an dem oben genannten Dachbalken, beispielsweise mittels einer Schraubverbindung befestigt werden.

Schließlich ist vorgesehen, dass wenigstens ein freiliegendes Ende eines Trapezblechs des Photovoltaiksystems eine Ausformung zur Aufnahme eines Dachziegels aufweist. Das freiliegende Ende ist dabei beispielsweise das über das Photovoltaikmodul hinausragende Ende des Trapezblechs einer Photovoltaikeinheit, die die letzte Photovoltaikeinheit in einer Reihe von Photovoltaikeinheiten bildet. Durch die Ausformung des freiliegenden Endes zur Aufnahme eines Dachziegels ist es möglich, das Photovoltaiksystem in ein Dach mit Dachziegeln zu integrieren, ohne dass ein auffälliger Übergang entsteht. Die Dachziegel können so besonders nah an dem Photovoltaiksystem angeordnet werden. Lediglich das letzte Trapezblech bedarf einer Umformung zur Bildung der Ausformung zur Aufnahme eines Dachziegels.

Das erfindungsgemäße Verfahren ist dadurch gekennzeichnet, dass das Stützblech derart geformt wird, dass es die Halterung bildet. Bevorzugt wird das Stützblech derart geformt, dass es das Photovoltaikmodul an mindestens einer, insbesondere an zwei gegenüberliegenden Seitenkanten zumindest bereichsweise einfasst. Dazu wird das Stützblech um die entsprechenden Seitenkanten des Photovoltaikmoduls herumgebogen oder derart in eine Photovoltaikmodul-Aufnahme geformt, das das Photovoltaikmodul in die Photovoltaikmodul-Aufnahme eingesteckt, geschoben und/oder eingeklemmt werden kann.

Schließlich ist vorgesehen, dass mindestens eine Seitenkante des Stützblechs derart gebogen wird, dass sie zumindest bereichsweise auf einer nach außen weisenden Oberseite des Photovoltaikmoduls aufliegt. Die Seitenkante des Stützblechs soll also so umgebogen werden, dass sie das Photovoltaikmodul wenigstens bereichsweise Einfasst beziehungsweise umschließt, wobei dadurch die Halterung gebildet wird.

Im Folgenden soll die Erfindung anhand mehrerer Ausführungsbeispiele näher erläutert werden. Dazu zeigen
- Figur 1: ein Ausführungsbeispiel einer erfindungsgemäßen Photovoltaikeinheit,
- Figur 2: einen Querschnitt durch die Photovoltaikeinheit,
- Figur 3: eine vergrößerte Darstellung des Querschnitts,
- Figur 4: einen Querschnitt durch ein vorteilhaftes Photovoltaiksystem,
- Figur 5: einen Längsschnitt durch das Photovoltaiksystem mit einem Abdeckblech und
- Figur 6: einen Längsschnitt durch das Photovoltaiksystem mit einer Dichtleiste.

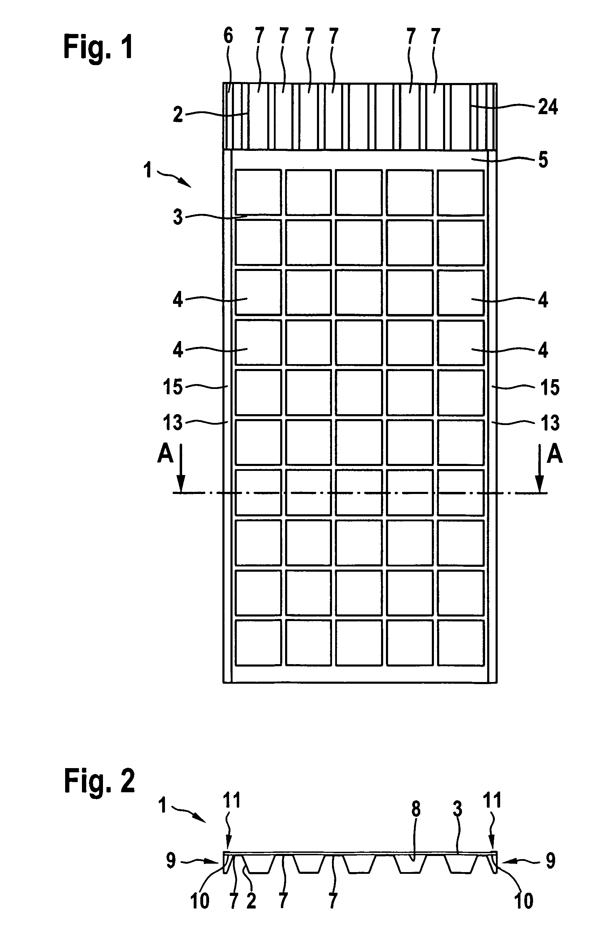

Die Figur 1 zeigt in einer Draufsicht ein Ausführungsbeispiel einer vorteilhaften Photovoltaikeinheit 1, die ein von einem Stützblech 2 getragenes Photovoltaikmodul 3 aufweist. Das Photovoltaikmodul 3 weist eine Vielzahl von nebeneinander und hintereinander angeordneten Solareinheiten 4 auf, von denen hier nur einige mit einem Bezugszeichen versehen sind und die von einer Kunststoffschicht 5 getragen werden. Eine die Solareinheiten 4 bedeckende Glasscheibe ist hier nicht näher dargestellt. Das Stützblech 2 ist als Trapezblech 6 ausgebildet, das mehrere in Längsrichtung verlaufende Erhebungen 7 aufweist.

Die Figur 2 zeigt hierzu einen Querschnitt durch die Photovoltaikeinheit 1 entlang der Linie A-A der Figur 1. Der Querschnitt zeigt deutlich das kantenförmige Trapezprofil des Stützblechs 2, das die Erhebungen 7 aufweist. Die Erhebungen 7 sind flach ausgebildet und liegen in einer Ebene. Auf den Erhebungen 7 liegt das Photovoltaikmodul 3 mit seiner Rückseite 8 jeweils flächig auf. Die Erhebungen 7 des Stützblechs 2 sind derart ausgebildet, dass der Freiraum zwischen den Erhebungen so breit wie die Erhebungen selbst ausgebildet ist. Im vorliegenden Ausführungsbeispiel ist das Trapezblech 6 derart geformt, dass sich jede der Solareinheiten 4 in der Draufsicht der Figur 1 gesehen von einer Erhebung 7 bis zu einer benachbarten Erhebung 7 erstreckt. (Natürlich liegen hierbei die Solareinheiten 4 nicht direkt auf den Erhebungen 7 des Trapezblechs 6 auf. Zwischen den Solareinheiten 4 und dem Trapezblech 6 befindet sich noch zumindest die Kunststoffschicht 5, auf der die Solareinheiten 4 angeordnet sind.) Hierdurch wird die Stabilität des Photovoltaikmoduls 3 und der Photovoltaikeinheit 1 insgesamt erhöht. In einer alternativen Ausführungsform ist das Trapezblech 6 derart ausgebildet, dass jeweils eine Solareinheit 4 auf einer Erhebung 7 liegt. Ebenfalls ist es möglich, das Trapezblech 6 derart zu formen, dass die Erhebungen 7 breiter als die dazwischen liegenden Freiräume oder auch schmaler als die dazwischen liegenden Freiräume ausgebildet sind.

Wie aus der Figur 2 weiterhin ersichtlich, sind Seitenkanten 9 des Trapezblechs 6 derart geformt, dass sie die zwei gegenüberliegenden Seitenkanten 10 des Photovoltaikmoduls 3 umfassen beziehungsweise einfassen. Somit bildet das Stützblech 2 durch Einfassung der Seitenkanten 10 des Photovoltaikmoduls 3 eine Halterung 11, mittels der das Photovoltaikmodul 3 an dem Stützblech 2 gehalten wird.

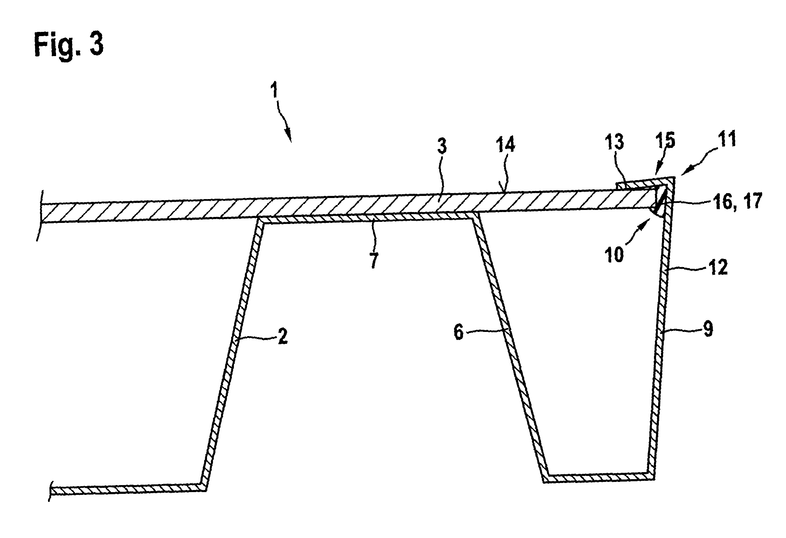

Die Figur 3 zeigt hierzu in einem vergrößerten Ausschnitt der Figur 2 das Trapezblech 6 mit seiner äußersten Erhebung 7, auf der das Photovoltaikmodul 3 aufliegt. Auf die äußerste Erhebung 7 folgt ein Blechabschnitt 12, der sich nach oben in Richtung des Photovoltaikmoduls 3 und daran vorbei erstreckt, wobei das freie Ende 13 des Blechabschnitts 12 in Richtung des Photovoltaikmoduls 3 nach unten gebogen ist und somit auf der Oberseite 14, die von der oben genannten Glasscheibe gebildet wird, aufliegt. Das Photovoltaikmodul 3 wird somit an seinen Seitenkanten durch das Stützblech 3 beziehungsweise das Trapezblech 6 eingefasst, wobei sich die jeweilige Einfassung 15, wie in der Figur 1 dargestellt, über die gesamte Länge des Photovoltaikmoduls 3 erstreckt. Durch die Einfassungen 15, die die Halterung 11 bilden, wird das Photovoltaikmodul 3 sicher an dem Stützblech 2 gehalten. Die wie dargestellt geformte Seitenkannte 9 bildet hierbei eine Photovoltaikmodul-Aufnahme. Durch die Einfassungen 15 ist das Photovoltaikmodul darüber hinaus an den Seitenkanten 10 geschützt, wobei die Einfassungen 15 jeweils einen Kantenschutz bilden, sodass das Photovoltaikmodul 3 selbst rahmenlos und damit im Vergleich zu üblichen Photovoltaikmodulen schmaler und günstiger herstellt werden kann. Der Rahmen wird in diesem Fall durch die Einfassungen 15 des Stützblechs 2 gebildet. Bei der Montage der Photovoltaikeinheit 1 kann das Photovoltaikmodul 3 in die Einfassungen 15 des Stützblechs 2 eingeschoben und/oder eingeklemmt werden. Vorteilhafterweise weist das Trapezblech 6 eine Eigenelastizität auf, sodass die Seitenkanten 9 auseinandergebogen werden können, das Photovoltaikmodul 3 auf Erhebungen 7 aufgelegt und anschließend die Seitenkante 9 zurückfedern können, wodurch das Photovoltaikmodul 3 eingefasst und die Halterung 11 realisiert wird. Durch die vorteilhafte Eigenelastizität wird neben dem Formschluss auch ein Kraftschluss der Halterung 11 realisiert, wodurch die Sicherheit gegen ein ungewolltes Lösen des Photovoltaikmoduls 3 erhöht wird. Vorteilhafterweise ist zwischen den Seitenkanten 10 des Photovoltaikmoduls 3 und der jeweiligen Einfassung 15 ein Dichtelement 16, das vorliegend als Dichtungsgummi 17 ausgebildet ist, angeordnet, dass sich zweckmäßigerweise über die gesamte Länge der Einfassung 15 erstreckt. Alternativ zum Dichtungsgummi könnte auch eine andere Dichtungsmasse vorgesehen sein.

In einer vorteilhaften Weiterbildung der Erfindung wird die Stabilität der Halterung 11 dadurch weiter erhöht, dass mindestens eine der mittleren Erhebungen 7 höher als die außen liegenden Erhebungen 7 ausgebildet ist. Insbesondere, wenn das Trapezblech 6 eine ungerade Anzahl an Erhebungen 7 aufweist, ist die in der Mitte angeordnete Erhebung höher ausgebildet als die übrigen Erhebungen. Dadurch erfährt das Photovoltaikmodul 3 eine Biegung, wodurch es zwischen den Erhebungen 7 und der Halterung 11 eingeklemmt wird. Durch die entstehenden Anpresskräfte wird zum Einen der Kraftschluss zwischen Photovoltaikmodul 3 und Stützblech 2 beziehungsweise Halterung 11 erhöht und zum Anderen ein guter Wärmeübergang von dem Photovoltaikmodul 3 auf das Stützblech 2 beziehungsweise Trapezblech 6 gewährleistet. Naturgemäß wird das Photovoltaikmodul 3 durch die Sonneneinstrahlung erhitzt. Durch das feste Anliegen des Photovoltaikmoduls 3 an den Trapezblech 6 wird ein guter Wärmeübergang, wie bereits gesagt, gewährleistet. Wobei das Trapezblech 6 wie Kühlrippen für das Photovoltaikmodul 3 wirkt, sodass die Wärme aus dem Photovoltaikmodul 3 besonders gut abgeführt wird. Durch diesen vorteilhaften Kühleffekt wird die Temperatur des Photovoltaikmoduls 3 verringert/reduziert, wodurch seine Leistung erhöht werden kann. Wird die Photovoltaikeinheit 1 in Richtung der Erhebungen 7 vertikal auf einem Dach montiert, so strömt aufsteigende Luft durch die Zwischenräume des Trapezblechs 6 an der Rückseite des Photovoltaikmoduls 3 entlang, sodass eine durchgängige Hinterlüftung der Photovoltaikeinheit 1 mit einem großen Querschnitt gewährleistet ist. Ein weiterer Vorteil des Trapezblechs 6 liegt darin, dass insgesamt die Auflagefläche der Photovoltaikeinheit 1 auf einem Dach klein ausfällt und nur eine geringe Anzahl an Montagepunkten notwendig ist. Durch das Trapezprofil ist die Photovoltaikeinheit 1 insgesamt sehr stabil und tragfähig ausgebildet. Mit einem geringen Aufwand kann die dargestellte Photovoltaikeinheit 1 zusätzlich als Warmluftkollektor ausgebildet werden, sodass neben der Umwandlung von Sonnenenergie in elektrische Energie auch eine Wärmewandlung, beispielsweise zum Aufwärmen von Wasser, möglich ist.

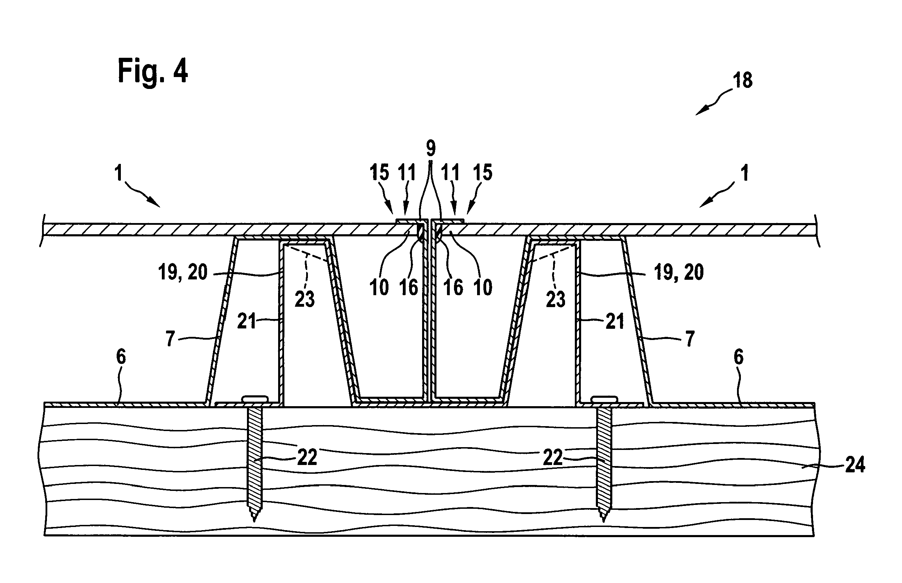

Werden mehrere Photovoltaikeinheiten 1 zusammengeschlossen, so bilden sie ein Photovoltaiksystem, wobei die Photovoltaikeinheiten 1 nebeneinander oder hintereinander angeordnet sein können. Unter hintereinander ist in diesem Zusammenhang das Anordnen der Photovoltaikeinheiten 1 in Richtung ihrer Längserstreckung beziehungsweise in Richtung der Erstreckung der Erhebungen 7 des Trapezblechs 6 zu verstehen. Die Figur 4 zeigt in einer Querschnittsdarstellung einen Ausschnitt von zwei nebeneinander angeordneten Photovoltaikeinheiten 1 eines entsprechenden Photovoltaiksystems 18. Zunächst ist aus Figur 4 ersichtlich, dass die Photovoltaikmodule 3 der beiden Photovoltaikeinheiten 1 durch die vorteilhaften Einfassungen 15 gegeneinander geschützt sind. Die beiden nebeneinander liegenden Photovoltaikeinheiten 1 werden mittels eines als U-Schiene 19 ausgebildeten Verbindungsstücks 20 miteinander verbunden. Die (einander gegenüberliegenden) Schenkel der U-Schiene 19 werden dabei von zwei parallel verlaufenden Erhebungen 21 gebildet, die trapezförmig ausgebildet sind, also einen trapezförmigen Querschnitt aufweisen. Die Erhebungen 21 liegen dabei in den äußeren Erhebungen 7 der Trapezfläche 6 der Photovoltaikeinheiten 1 ein. Im Vergleich zu den Erhebungen 7 sind die Erhebungen 21 in etwa halb so breit ausgebildet, sodass in dem Freiraum zwischen den Erhebungen 7 und 21 Befestigungsmittel, wie zum Beispiel eine Schraube 22, die zum Befestigen der U-Schiene 19 beispielsweise an einem Dachbalken dient, ausreichend Freiraum zu Verfügung hat. Die Höhe der Erhebungen 21 entspricht im Wesentlichen der Höhe der Erhebungen 7, sodass diese im montierten Zustand aneinander beziehungsweise aufeinanderliegen. Die Hauptfunktion der U-Schiene 19 besteht im Wesentlichen darin, dass in dem in der Figur 4 dargestellten vertikalen Stoßbereich der Photovoltaikeinheiten 1 eventuell eintretendes (Regen-)Wasser zur Traufe hin abgeleitet wird, sodass die wasserabweisende Funktion eines das Photovoltariksystem 18 aufweisenden Daches erhalten bleibt. Dringt also Wasser durch einen zwischen den die Halterungen 11 befindlichen Spalt, so läuft es in den tiefer liegenden Bereich zwischen den Erhebungen 21 der U-Schiene 19 und wird durch die U-Schiene 19 abgeleitet. In einer alternativen Ausführungsform fallen die Erhebungen 21 der U-Schiene 19 zur Mitte der U-Schiene 19 hin ab, wie hier durch jeweils eine gestrichelte Linie 23 angedeutet. Hierdurch wird eine Kapillarwirkung unterbrochen, durch welche eingedrungenes Wasser durch einen schmalen Spalt zwischen dem Trapezblech 6 und der U-Schiene 19 gefördert wird. Somit wird auf einfache Art und Weise ein weiteres Vordringen des Wassers verhindert und die Dichtwirkung des Verbindungsstücks 20 beziehungsweise der U-Schiene 19 erhöht. In dem in der Figur 4 dargestellten Ausführungsbeispiel ist das Photovoltaiksystem 18 auf einer Tragekonstruktion 24 montiert. Die Tragekonstruktion 24 kann dabei ein Hausdach oder auch eine extra Tragekonstruktion 24 sein, die zur Vormontage des Photovoltaiksystem 18 dient, sodass dieses als eine Einheit auf einem Dach montiert werden kann. Die U-Schiene 19 erlaubt weiterhin, dass einzelne Photovoltaikeinheiten 1 des Photovoltaiksystems 18 auf einfache Art und Weise demontiert werden können.

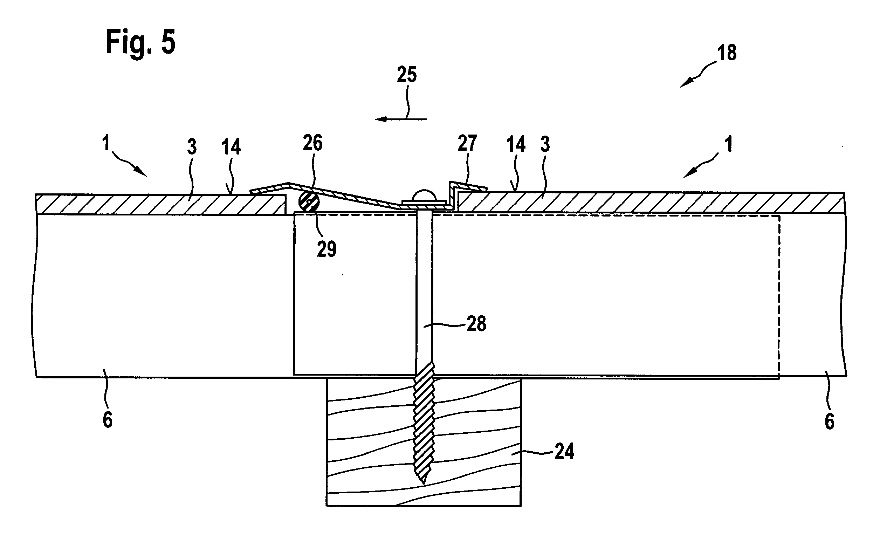

Die Figur 5 zeigt hintereinander liegend angeordnete Photovoltaikeinheiten 1 des Photovoltaiksystems 18 in einer Längsschnittdarstellung. Die Photovoltaikeinheiten 1 sind dabei geschuppt angeordnet. Hierzu sind die Trapezbleche 6, wie auch in der Figur 1 dargestellt, derart ausgebildet, dass sie mit ihren freien Enden über das jeweilige Photovoltaikmodul 3 hinausragen. Vorteilhafterweise ragen die Trapezbleche 6 an beiden Seiten des Photovoltaikmoduls 3 über dieses hinaus, sind also länger als dieses ausgebildet. Wie in der Figur 5 dargestellt, liegt das Trapezblech 6 der rechts dargestellten Photovoltaikeinheit 1 auf dem Trapezblech 6 der links dargestellten Photovoltaikeinheit 1 auf, sodass sich die Trapezbleche 6 überlappen. Zweckmäßigerweise wird das Photovoltaiksystem 18 derart an einem Dach angeordnet, dass das auf den Photovoltaikeinheiten 1 herab laufende Wasser in Richtung des Pfeils 25 strömt. Durch die dargestellte geschuppte Anordnung der Photovoltaikeinheiten 1 beziehungsweise der Trapezfläche 6 bleibt auch hier die wasserabweisende Funktion des Dachs wie bei Dachziegeln erhalten, wobei das Wasser zunächst von dem einen Trapezblech 6 (rechts) auf das dahinter liegende angeordnete Trapezblech 6 (links) gelangt.

Die Figur 5 zeigt weiterhin, dass die Photovoltaikmodule der beiden Photovoltaikeinheiten 1 beabstandet zueinander angeordnet sind. Dies ist auch deswegen sinnvoll, weil die Photovoltaikmodule 3, die bevorzugt rahmenlos ausgebildet sind, an den Stirnenden nicht eingefasst beziehungsweise eingerahmt sind, sodass sie nicht geschützt sind. Damit kein Wasser zwischen die Photovoltaikmodule 3 beziehungsweise auf die Trapezfläche 6 gelangt, ist vorteilhafterweise eine Verbindungsschiene 26 zwischen den Photovoltaikmodulen 3 angeordnet, die auf jeweils einem der Photovoltaikmodule 3 aufliegt. Somit wird das in Richtung des Pfeils 25 strömende Wasser von einem Photovoltaikmodul 3 auf das nächste geleitet. In dem vorliegenden Ausführungsbeispiel ist die Verbindungsschiene 26 als ein Abdeckblech 27 ausgebildet, das mit seinen Seitenkanten auf jeweils einem der Photovoltaikmodule 3 aufliegt. Das Abdeckblech 27 ist dabei strömungstechnisch günstig geformt. Weiterhin ist es eigenelastisch ausgebildet und mittels einer Befestigungsschraube 28 an den Trapezflächen 6 und/oder an der oben genannten Tragekonstruktion 24 befestigbar, wobei es zwischen der Befestigungsschraube 28 und den Photovoltaikmodulen 3 eingespannt wird. Durch dieses Einspannen wird ein sicherer Kontakt des Abdeckblechs 27 mit dem jeweiligen Photovoltaikmodul 3 beziehungsweise mit der Oberfläche 14 gewährleistet. Das in der Figur 5 dargestellte Abdeckblech 27 weist im Wesentlichen eine S-Form auf, wobei die Befestigungsschraube 28 das Abdeckblech 27 nahe dem rechts angeordneten Photovoltaikmodul 3 beaufschlagt. Um sicherzustellen, dass die nach links weisende Seitenkante des Abdeckblechs 27 auf der Oberfläche 14 aufliegt und nicht beispielsweise umklappt, ist nahe dem Photovoltaikmodul 3 ein insbesondere elastisch ausgebildeter Abstandshalter 29, der in dem vorliegenden Ausführungsbeispiel einen kreisringförmigen Querschnitt aufweist, vorgesehen, der zwischen den Trapezflächen 6 und dem Abdeckblech 27 angeordnet ist. Durch die vorteilhafte Ausbildung des Photovoltaiksystems 18 gemäß der Figur 5 wird Wasser entlang der Oberseiten 14 der Photovoltaikmodule 3 geleitet, während die Luft durch die Zwischenräume der Trapezbleche 6 nach oben (entgegen der Richtung des Pfeils 25) strömen und dadurch die Photovoltaikmodule 3 kühlt.

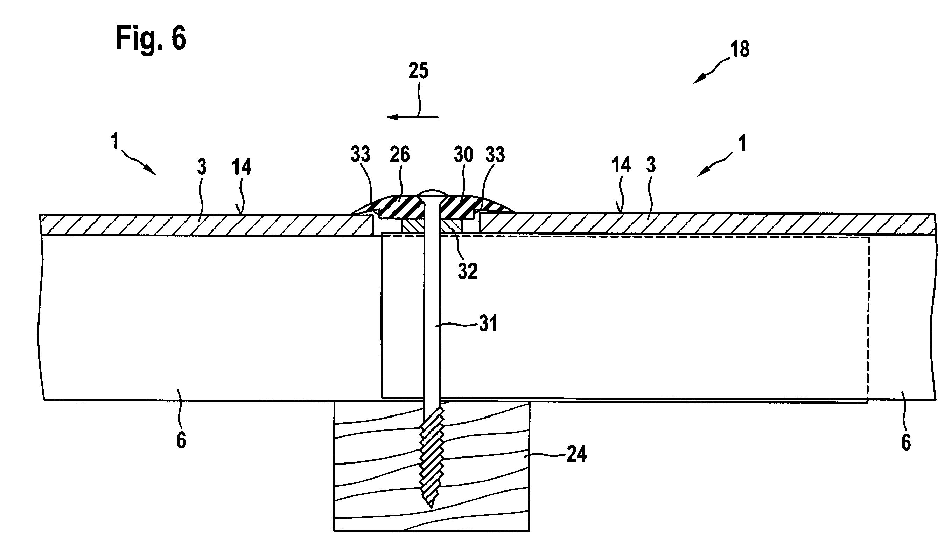

Die Figur 6 zeigt in einer weiteren Längsschnittdarstellung ein Ausführungsbeispiel des Photovoltaiksystems 18, wobei anstelle des Abdeckblechs die Verbindungsschiene 26 als eine im Wesentlichen T-förmige Dichtleiste 30 ausgebildet ist. Die Dichtleiste 30 liegt dabei mit ihren Seitenkanten ebenfalls auf den Oberseiten 14 des jeweiligen Photovoltaikmoduls 3 auf, wodurch das herunterströmende Wasser von einem Photovoltaikmodul auf das nächste geleitet wird. Auf der Dichtleiste 30 ist mittels einer Befestigungsschraube 31 an der bereits genannten Tragekonstruktion 24 und/oder an den Trapezblechen 6 befestigt. Zwischen der Dichtleiste 30 und den Trapezflächen 6 beziehungsweise den Erhebungen 7 der Trapezfläche 6 ist ein elastisch verformbarer Abstandhalter 32 angeordnet, der die Dichtwirkung der Dichtleiste sowie die Befestigung des Photovoltaiksystems 18 an der Tragekonstruktion 24 dauerhaft gewährleistet. Weiterhin weist die T-förmige Dichtleiste 30 aufgrund der T-Form Anschläge 33 auf, die mit der Stirnseite des jeweiligen Photovoltaikmoduls 3 zusammenwirken können. Die Dichtleiste 30 kann hierbei also gleichzeitig als Abstandhalter verwendet werden.

Insgesamt wird durch die vorteilhaften Ausbildungsformen ein Photovoltaiksystem geboten, das mehrere nebeneinander und/oder hintereinander liegend angeordnete Photovoltaikeinheiten aufweist, das insgesamt wasserabweisend wirkt, eine wirkungsvolle Kühlung für die Photovoltaikmodule vorsieht und gleichzeitig als Warmluftkollektor verwendet werden kann. Die Integration von Wohndachfenstern kann über Standardeindeckrahmen für Trapezblech-Eindeckungen vorgenommen werden. Weiterhin ermöglicht das Photovoltaiksystem 18 beziehungsweise die Photovoltaikeinheit 1 eine einfache und schnelle Montage/Demontage sowie geringe Herstellungskosten.

## Patentansprüche

1. Photovoltaikeinheit mit mindestens einem von einem Stützblech getragenen Photovoltaikmodul und mit mindestens einer der Befestigung des Photovoltaikmoduls an dem Stützblech dienenden Halterung, **dadurch gekennzeichnet, dass** das Stützblech (2) die Halterung (11) bildet.

2. Photovoltaikeinheit nach Anspruch 1, **dadurch gekennzeichnet, dass** die Halterung (11) von einer zumindest bereichsweisen Einfassung (15) des Photovoltaikmoduls (3) durch das Stützblech (2) gebildet wird.

3. Photovoltaikeinheit nach einem der vorhergehenden Ansprüche, **dadurch gekennzeichnet, dass** das Stützblech (2) das Photovoltaikmodul (3) an zumindest einer Seitenkante (10) wenigstens bereichsweise einfasst.

4. Photovoltaikeinheit nach einem der vorhergehenden Ansprüche, **dadurch gekennzeichnet, dass** das Stützblech (2) einen Kantenschutz für die Seitenkante (10) des Photovoltaikmoduls (3) bildet.

5. Photovoltaikeinheit nach einem der vorhergehenden Ansprüche, **dadurch gekennzeichnet, dass** das Photovoltaikmodul (3) rahmenlos ausgebildet ist.

6. Photovoltaikeinheit nach einem der vorhergehenden Ansprüche, **dadurch gekennzeichnet, dass** Stützblech (2) als Trapezblech (6) ausgebildet ist.

7. Photovoltaikeinheit nach einem der vorhergehenden Ansprüche, **dadurch gekennzeichnet, dass** das Trapezblech (6) mehrere Erhebungen (7) aufweist, auf denen das Photovoltaikmodul (3) aufliegt.

8. Photovoltaikeinheit nach einem der vorhergehenden Ansprüche, **dadurch gekennzeichnet, dass** sich zumindest ein freies Enden des Trapezblechs (6) über das Photovoltaikmodul (3) hinaus erstreckt.

9. Photovoltaikeinheit nach einem der vorhergehenden Ansprüche, **gekennzeichnet durch** die Ausbildung als Warmluftkollekor.

10. Photovoltaiksystem **gekennzeichnet durch** mindestens zwei nebeneinander und/oder hintereinander angeordnete Photovoltaikeinheiten (1) nach einem oder mehreren der vorhergehenden Ansprüche.

11. Photovoltaiksystem nach einem der vorhergehenden Ansprüche, **dadurch gekennzeichnet, dass** zwei nebeneinander liegende Trapezbleche (6) mittels eines Verbindungsstücks (20) miteinander verbunden sind.

12. Photovoltaiksystem nach einem der vorhergehenden Ansprüche, **dadurch gekennzeichnet, dass** zwischen hintereinander liegenden Photovoltaikeinheiten (1) jeweils eine Verbindungsschiene (26) angeordnet ist, die auf jeweils einem Photovoltaikmodul (3) zumindest berreichsweise aufliegt.

13. Photovoltaiksystem nach einem der vorhergehenden Ansprüche, **dadurch gekennzeichnet, dass** die Verbindungsschiene (26) als Abdeckblech (27) ausgebildet ist.

14. Verfahren zum Herstellen einer Photovoltaikeinheit, die mindestens ein von einem Stützblech getragenes Photovoltaikmodul aufweist, wobei das Photovoltaikmodul mittels mindestens einer Halterung an dem Stützblech befestigt wird, **dadurch gekennzeichnet, dass** das Stützblech derart geformt wird, dass es die Halterung bildet.

15. Verfahren nach Anspruch 14, **dadurch gekennzeichnet, dass** das Stützblech derart geformt wird, dass es das Photovoltaikmodul an einer, insbesondere an zwei gegenüberliegenden Seitenkanten zumindest bereichsweise einfasst.
